Europäisches Patentamt

European Patent Office

Office européen des brevets

(19)

(11) **EP 1 474 473 B1**

(12) **EUROPÄISCHE PATENTSCHRIFT**

| | |
|---|---|
| (45) Veröffentlichungstag und Bekanntmachung des Hinweises auf die Patenterteilung:<br>**19.10.2005   Patentblatt 2005/42** | (51) Int Cl.[7]: **C08K 5/11**, D01F 1/10,<br>    D01F 6/46 |
| (21) Anmeldenummer: 03704532.5 | (86) Internationale Anmeldenummer:<br>**PCT/EP2003/001096** |
| (22) Anmeldetag: **05.02.2003** | (87) Internationale Veröffentlichungsnummer:<br>**WO 2003/068856 (21.08.2003 Gazette 2003/34)** |

(54) **WEICHMACHENDE AUSRÜSTUNG VON POLYOLEFIN-HALTIGEN GEGENSTÄNDEN**

SOFTENING FINISHING OF OBJECTS CONTAINING POLYOLEFINS

ASSOUPLISSAGE D'ARTICLES CONTENANT DES POLYOLEFINES

| | |
|---|---|
| (84) Benannte Vertragsstaaten:<br>**AT BE BG CH CY CZ DE DK EE ES FI FR GB GR HU IE IT LI LU MC NL PT SE SI SK TR** | (72) Erfinder:<br>• **WILD, Christine**<br>  **40724 Hilden (DE)**<br>• **BIRNBRICH, Paul**<br>  **42719 Solingen (DE)**<br>• **MATHIS, Raymond**<br>  **40627 Düsseldorf (DE)** |
| (30) Priorität: **13.02.2002   DE 10206111** | |
| (43) Veröffentlichungstag der Anmeldung:<br>**10.11.2004   Patentblatt 2004/46** | |
| (73) Patentinhaber: **Cognis Deutschland GmbH & Co. KG**<br>**40789 Monheim (DE)** | (56) Entgegenhaltungen:<br>**EP-A- 1 138 810         WO-A-02/092891** |

EP 1 474 473 B1

**Beschreibung**

Die vorliegende Erfindung betrifft Additive zur permanenten Hydrophilierung von Polyolefine enthaltenden Materialien vorzugsweise Polypropylenfasern.

In zahlreichen Fällen muß die Oberfläche von Kunststoff-Erzeugnissen mit speziellen Effekten versehen werden, die sich während der Formgebung entweder aus technischen Gründen gar nicht bzw. nur unvollkommen oder aber aus wirtschaftlichen Gründen nur unvorteilhaft erzeugen lassen. Ein solcher Effekte ist beispielsweise die Verbesserung der Weichheit der Erzeugnisse, insbesondere bei Artikeln, die direkt mit der menschlichen Haut in Kontakt geraten.

Bei der Herstellung von Hygieneartikeln, wie Windeln oder Damenbinden, aber auch von Wischtücher oder Geovliesen werden absorbierende Materialien verwendet, um wäßrige Flüssigkeiten aufzunehmen. Um den direkten Kontakt mit dem absorbierenden Material beim Tragen zu verhindern und den Tragekomfort zu erhöhen wird dieses Material mit einem dünnen, wasserdurchlässigen Vliesstoff umhüllt. Derartige Vliesstoffe werden üblicherweise aus synthetischen Fasern, wie Polyolefin- oder Polyesterfasem hergestellt, da diese Fasern preiswert zu produzieren sind, gute mechanische Eigenschaften aufweisen und thermisch belastbar sind. Aufgrund dieser Anwendung ist es auch gewünscht, Vliesstoffe bereitzustellen, die eine größtmögliche Weichheit aufweisen.

Derartige Additive werden in der Regel zusammen mit einem Polyolefin-Granulat zu einem Vorgemisch (Masterbatch) verarbeitet, daß dann als solches dem Polymergranulat vor der Verarbeitung zur Faser oder zu sonstigen Endprodukten zugesetzt und anschließend extrudiert wird. Gewünscht ist es aus Kostengründen aber, solche Additive direkt während des Extrusionsprozesses in der Extrusionsanlage zudosieren zu können.

Die Aufgabe der vorliegenden Erfindung bestand daher darin, Additive zur Verbesserung der Weichheit von Polyolefinfasem bzw. Artikeln, die solche Fasern enthalten, bereitzustellen.

Ein erster Gegenstand der vorliegenden Erfindung die Verwendung von Verbindungen der allgemeinen Formeln (I) oder (II), zur weichmachenden Ausrüstung von polyolefinhaltigen Gegenständen.

$$A\text{-}B\text{-}C\text{-}B\text{-}A \qquad (I)$$

$$A\text{-}B\text{-}A \qquad (II)$$

In diesen Formeln bedeutet A jeweils einen Rest R-COO, wobei R für einen gesättigten, verzweigten oder unverzweigten Alkylrest mit 7 bis 21 C-Atomen steht, B jeweils eine Gruppe $(C_nH_{2n}O)_k$ bedeutet, wobei n für ganze Zahlen von 2 bis 4 steht und k die Werte von 1 bis 15 aufweisen kann und C in der Formel (I) für einen linearen oder verzweigten Alkylenrest mit mindestens 2 und höchstens 6 C-Atomen steht. Der Index k bezieht sich hierbei auf die einzelne Gruppe B und gibt nicht die Gesamtzahl der Gruppe B im Molekül an. Der Index k variiert aufgrund der unterschiedlichen, technisch bedingten Alkoxylierungsgrade der Einzelmoleküle und kann daher auch ungeradzahlig sein.

Die Verbindungen der allgemeinen Formel (I) werden beispielsweise durch Umsetzung von Polyalkylenglykolen und Alkoxiden sowie mit gesättigten Fettsäuren erhalten. Dabei müssen zum einen Diole mit 2 bis 6 C-Atomen vorhanden sein, die den Baustein C der erfindungsgemäßen Additive bilden, als auch Ethylen-, Propylen- und/oder Butylenoxid, die die Gruppen B in den erfindungsgemäßen Verbindungen bilden. Die freien Hydroxylgruppen der Alkoxide werden mit gesättigten Fettsäuren mit 8 bis 22 C-Atomen terminiert. Derartige Verbindungen und ihre Herstellung ist aus der DE 10123863.0 der Anmelderin bekannt.

Die Diole werden vorzugsweise ausgewählt aus der Gruppe 1,2-Ethandiol, 1,2-Propandiol, 1,3-Propandiol und 1,4-Butandiol. Prinzipiell können auch Mischungen der Diole eingesetzt werden, wobei es sich als vorteilhaft erwiesen hat, nur ein Diol zu Reaktion auszuwählen.

Die Alkoxide sind ausgewählt aus der Gruppe von Ethylenoxid, Propylenoxid und Butylenoxid, wobei hier auch beliebige Mischungen möglich sind. Werden verschiedenartige Alkoxide umgesetzt kann die Alkoxylierung sowohl Blockweise als auch randomisiert erfolgen. Die Anzahl von Alkoxideinheiten in den Verbindungen der Formel (I) schwankt im Bereich von insgesamt 2 bis 30, so daß k jeweils den Wert 1 bis 15 annehmen kann. Bevorzugt sind solche Verbindungen der Formel (I) in der k jeweils für die Zahlen 2 bis 15 und insbesondere 4 bis 10 und ganz besonders bevorzugt für 10 steht. Weiterhin sind solche Verbindungen der Formel (I) bevorzugt, die Ethylenoxideinheiten als Gruppe B enthalten, vorzugsweise nur Ethylenoxideinheiten.

Geeignete gesättigte Fettsäuren, die die Gruppe A der erfindungsgemäßen Verbindungen bilden können, sind vorzugsweise ausgewählt aus der Gruppe Octansäure, Nonansäure, Decansäure, Undecansäure, Dodecansäure, Tridecansäure, TeUadecansäure, Pentadecansäure, Hexadecansäure Heptadecansäure und Octadecansäure, sowie Nonadecansäure, Eicosansäure und Heneicosansäure sowie Docosansäure. Bevorzugt werden solche Verbindungen der Formel (I) in der R für einen gesättigten Alkylrest mit 9 bis 13 bzw. 9 bis 11 C-Atomen steht. Ganz besonders bevorzugt sind Verbindungen der Formel (I) die auf Decansäure ($C_{10}$) und die Undecansäure ($C_{11}$) basieren.

Bevorzugt sind solche Verbindungen der Formel (I), deren Kältetrübungspunkt niedriger als 12 °C, vorzugsweise niedriger als 10 °C und insbesondere niedriger als 6 °C ist. Mit besonderem Vorteil werden Verbindungen der Formel (I) ausgewählt, deren Kältetrübungspunkt niedriger als 5 °C und insbesondere niedriger als 3 °C ist.

Bevorzugte Verbindungen, die sich als Additive im Sinne der vorliegenden Erfindung eignen gehorchen der Formel (I) in der R für einen linearen Alkylrest mit 9 C-Atomen steht, k jeweils den Wert 5 hat, n für 2 und C für einen Rest $CH_2$-$CH_2(CH_3)$ steht oder in der R für einen linearen Alkylrest mit 11 C-Atomen steht, k den Wert 5 hat, n für 2 und C für einen Rest $CH_2CH_2(CH_3)$ steht.

Die erfindungsgemäßen Additive können alleine oder in Abmischungen untereinander eingesetzt werden. Außerdem können weitere, aus dem Stand der Technik bekannte Additive für die Polymerextrusion bzw. -herstellung zugegeben werden.

Neben den Additiven der Formel (I) können auch solche der Formel (II) Verwendung finden. Diese Verbindungen der Formel (II) werden durch Umsetzung von zwei Teilen Fettsäuren mit 8 bis 22 C-Atomen, vorzugsweise mit 10 bis 12 C-Atomen mit einem Teil Polyethylenglykol hergestellt. Vorzugsweise werden Polyethylenglykole mit einem Molgewicht von 300 bis 600, vorzugsweise mit einem Molgewicht von 400, mit Fettsäuren oder deren Derivaten nach an sich bekannten Verfahren, vorzugsweise in Gegenwart von Katalysatoren, umgesetzt. Besonders bevorzugt sind gesättigte Fettsäuren mit 10 bis 12 C-Atomen und als geeignete Fettsäurederivate sind Methylester von C10 bis C12-Fettsäuren bevorzugt. Die Alkohol- und die Säurekomponente werden im Mol-Verhältnis von etwa 1 zu 2 umgesetzt. Besonders bevorzugt ist die Verwendung von Umsetzungsprodukten von Polyethylenglykol mit dem Molgewicht 400 mit Decan- oder Laurinsäure. Es können auch Mischungen der Säuren mit dem Polyethylenglykol umgesetzt werden. Die Verbindungen der Formel (II) sind Gegenstand der Anmeldung WO 01175199. In dieser Schrift wird auch die Verwendung von Verbindungen der Formel (II) zur Hydrophilierung von polyolefinhaltigen Fasern offenbart, ohne das der Schrift zu entnehmen ist, dass sich die Additive auch zur weichmachenden Ausrüstung eignen.

Im Rahmen der vorliegenden Erfindung werden die Additive in Polyolefine enthaltenden Materialien, vorzugsweise Fasern, Flächengebilden, wie Vliesstoffen und Folien zur Verbesserung der Weichheit eingesetzt.

Bezüglich des Polyolefine enthaltenden Materials eigenen sich an sich alle bekannten Polymer- und Copolymertypen auf Ethylen- beziehungsweise Propyten-Basis. Auch Abmischungen reiner Polyolefine mit Copolymeren sind grundsätzlich geeignet. Desgleichen können die Additive in Mischungen aus Polyolefinen mit anderen synthetischen oder natürlichen Polymeren, z. B. Cellulose oder Hanf eingesetzt werden, um den Polyolefinfasem eine bessere Weichheit zu verleihen.

Für die erfindungsgemäße Lehre besonders geeignete Polymertypen sind in der nachfolgenden Zusammenstellung aufgezählt: Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vemetztes Polyethylen), HPPE (high pressure polyethylene); Poly(propylene) wie isotaktisches Polypropylen; syndiotaktisches Polypropylen; Metallocen-katalysiert hergestelltes Polypropylen PP, schlagzähmodifiziertes Polypropylen, Random-Copolymere auf Basis Ethylen und Propylen, Blockcopolymere auf Basis Ethylen und Propylen; EPM (Poly[ethylen-co-propylen]); EPDM (Poly[ethylen-co-propylen-co-konjugiertes Dien]).

Weitere geeignete Polymertypen sind: Poly(styrol); Poly(methylstyrol); Poly(oxymethylen); Metallocenkatalysierte alpha-Olefin- oder Cycloolefin-Copolymere wie Norbomen-Ethylen-Copolymere; Copolymere, die zu mindestens 60 % Ethylen und/oder Styrol enthalten und zu weniger als 40 % Monomere wie Vinylacetat, Acrylsäureester, Methacrylsäureester, Acrylsäure, Acrylnitril, Vinylchlorid. Beispiele solcher Polymeren sind: Poly(ethylen-co-ethylacrylat), Poly(ethylen-co-vinylacetat), Poly(ethylen-co-vinylchlorid), Poly(styrol-co-acrylnitril). Geeignet sind weiterhin Pfropfcopolymere sowie Polymerblends, das heißt, Mischungen von Polymeren, in denen unter anderem die vorgenannten Polymere enthalten sind, beispielsweise Polymerblends auf Basis von Polyethylen und Polypropylen.

Die Additive im sinne der vorliegenden Erfindung eignen sich auch zur weichmachenden Ausrüstung von sogenannten Biko-Fasern (core-sheat Fasern), die aus PES/PE oder PP/PE hergestellt werden.

Im Rahmen der vorliegenden Erfindung sind Homo- und Copolymere auf Basis von Ethylen und Propylen besonders bevorzugt. In einer Ausführungsform der vorliegenden Erfindung setzt man dementsprechend als Polyolefin ausschließlich Polyethylen ein, in einer anderen Ausführungsform ausschließlich Polypropylen, in einer weiteren Ausführungsform Copolymere auf Basis von Ethylen und Propylen.

In einer ganz besonders bevorzugten Ausführungsform der Erfindung werden die Additive in Polypropylenfasern verwendet. Derartige Fasern weisen vorzugsweise eine melt flow rate von größer 10 bis 1500 dg/min (gemessen bei 230 °C und 2,16 kg Belastung) auf wobei Fasern mit beispielsweise 150 bis 1200 oder 20 bis 25 bzw. 400 bis 1000 dg/min bevorzugt sein können.

Ermöglicht wird dadurch ein Verfahren zur weichmachenden Ausrüstung von Gegenständen, die ganz oder teilweise Polyolefine enthalten, wobei man eine Polymergranulat, das ganz oder teilweise Polyolefine enthält, mit Verbindungen der Formel (I) und/oder (II) in Mengen von 0,1 bis 5 Gew.% bezogen auf das Granulat, versetzt und anschließend in an sich bekannter Weise zu Fasern oder Folien verarbeitet, vorzugsweise durch Extrusion.

Die Gegenstände, vorzugsweise Fasern bzw.

Folien, oder Flächengebilden wie Vliesstoffe, aus diesen Fasern, enthalten die Additive vorzugsweise in Mengen von 0,1 bis 10 Gew.-%, vorzugsweise 0,1 bis 2,0 Gew.% und insbesondere 0,1 bis 1,8 Gew.% bezogen auf das Gesamtgewicht der Gegenstände. Diese Mengen liegen teilweise deutlich unter den Konzentrationen, die zum Erreichen einer Hydrophilierung bekannt sind. Die erfindungsgemäße Verwendung der Verbindungen der Formeln (I) und/oder (II) als interne Additive führt zu Polyolefin-haltigen Produkten mit guter Weichheit. Prinzipiell können Fasern, die mit den erfindungsgemäßen Additive ausgerüstet sind, natürlich auch noch eine externe weichmachenden Behandlung erfahren. Dabei ist vorteilhaft, daß bei diese zusätzliche exteme Behandlung die Menge an Avivage deutlich geringer gehalten werden kann, als ohne interne weichmachende Ausrüstung.

**Beispiel**

Die weichmachende Wirkung der erfindungsgemäßen Additive wurde wie folgt getestet. Zwei PP Spunbond-Vliese wurde hergestellt, einmal mit Zusatz eines erfindungsgemäßen Additivs (1,8 Gew.-%) der Formel (I), einmal ohne diesen Zusatz. Anschließend wurden die Weichheit der Vliese durch einen Grifftest ermittelt. Die möglichen Griffbeurteilungen gingen von 1 = sehr weich bis 4 hart. Während das nicht-additivierte Vlies die Note 3-4 erhielt, wurde das erfindungsgemäße Vlies mit 2 beurteilt.

**Patentansprüche**

1. Verwendung von Verbindungen der allgemeinen Formeln (I) und/oder (II)

$$A\text{-}B\text{-}C\text{-}B\text{-}A \qquad (I)$$

$$A\text{-}B\text{-}A \qquad (II)$$

in denen

A einen Rest R-COO bedeutet, wobei R für einen gesättigten, ungesättigten, verzweigten oder unverzweigten Alkylrest mit 7 bis 21 C-Atomen steht,
B eine Gruppe $(C_nH_{2n}O)_k$ bedeutet, wobei n für ganze Zahlen von 2 bis 4 steht und k die Werte 1 bis 15 aufweisen kann,
C für einen linearen oder verzweigten Alkylenrest mit mindestens 2 und höchstens 6 C-Atomen steht,

als interne Additive zur weichmachenden Ausrüstung von Gegenständen, die Polyolefine enthalten.

2. Verwendung gemäß Anspruch 1, **dadurch gekennzeichnet, daß** in der Formel (I) R für einen gesättigten, linearen Alkylrest mit 9 bis 13 C-Atomen und vorzugsweise 9 bis 11 C-Atomen steht.

3. Verwendung nach den Ansprüchen 1 und 2, **dadurch gekennzeichnet, daß** in der Formel (I) k die Werte 1 bis 15, vorzugsweise 4 bis 10 und insbesondere 5 bedeutet.

4. Verwendung nach den Ansprüchen 1 bis 3, **dadurch gekennzeichnet, daß** in der Formel (I) C für die Reste $CH_2\text{-}CH_2$, $CH_2\text{-}CH(CH_3)$, $CH_2\text{-}CH_2\text{-}CH_2$ oder $(CH_2)_4$ steht.

5. Verwendung nach den Ansprüchen 1 bis 4, **dadurch gekennzeichnet, daß** in der Formel (I) n für die Zahl 2 steht.

6. Verwendung nach den Ansprüchen 1 bis 4, **dadurch gekennzeichnet, daß** in der Formel (I) R für einen linearen Alkylrest mit 9 C-Atomen steht, k den Wert 5 hat, n für 2 und C für einen Rest $CH_2CH_2$ $(CH_3)$ steht.

7. Verwendung nach den Ansprüchen 1 bis 4, **dadurch gekennzeichnet, daß** in der Formel (I) R für einen linearen Alkylrest mit 11 C-Atomen steht, k den Wert 5 hat, n für 2 und C für einen Rest $CH_2\text{-}CH_2(CH_3)$ steht.

8. Verwendung nach den Ansprüchen 1 bis 7, **dadurch gekennzeichnet, daß** die Verbindungen der Formel (I) einen Kältetrübungspunkt von niedriger als 12 °C, vorzugsweise niedriger als 10 °C und insbesondere niedriger als 6 °C aufweisen.

9. Verwendung nach einem der Ansprüche 1 bis 8, **dadurch gekennzeichnet, daß** die Verbindungen der Formel (I) einen Kältetrübungspunkt von niedriger als 5 °C und vorzugsweise niedriger als 3 °C aufweisen.

10. Verwendung nach den Ansprüchen 1 bis 9, **dadurch gekennzeichnet, daß** die Verbindungen der Formel (II) durch Umsetzung von zwei Teilen Fettsäuren mit 8 bis 22 C-Atomen mit einem Teil Polyethylenglykol hergestellt werden.

11. Verwendung nach Anspruch 10, **dadurch gekennzeichnet, daß** die Verbindungen der Formel (II) durch Umsetzung von zwei Teilen Fettsäuren mit 10 bis 12 C-Atomen mit einem Teil Polyethylenglykol hergestellt werden.

12. Verwendung nach den Ansprüchen 10 und 11, **da-**

**durch gekennzeichnet, daß** bei der Umsetzung Polyethylenglykole mit Molgewichten von 300 bis 600, vorzugsweise 400 bis 500, hergestellt werden.

## Claims

1. The use of compounds corresponding to general formulae (I) and/or (II):

$$A\text{-}B\text{-}C\text{-}B\text{-}A \qquad (I)$$

$$A\text{-}B\text{-}A \qquad (II)$$

where
A is a group R-COO, where R is a saturated, unsaturated, branched or unbranched $C_{7-21}$ alkyl group,
B represents a group $(C_nH_{2n}O)_k$ in which n is an integer of 2 to 4 and k may assume a value of 1 to 15,
C is a linear or branched alkylene group containing at least 2 and at most 6 carbon atoms,
as internal additives for the softening finishing of articles containing polyolefins.

2. The use claimed in claim 1, **characterized in that** R in formula (I) is a saturated linear alkyl group containing 9 to 13 carbon atoms and preferably 9 to 11 carbon atoms.

3. The use claimed in claims 1 and 2, **characterized in that** k in formula (I) has a value of 1 to 15, preferably 4 to 10 and more particularly 5.

4. The use claimed in claims 1 to 3, **characterized in that** C in formula (I) is a $CH_2\text{-}CH_2$, $CH_2\text{-}CH(CH_3)$, $CH_2\text{-}CH_2\text{-}CH_2$ or $(CH_2)_4$ group.

5. The use claimed in claims 1 to 4, **characterized in that** n in formula (I) has a value of 2.

6. The use claimed in claims 1 to 4, **characterized in that** R in formula (I) is a linear alkyl group containing 9 carbon atoms, k has a value of 5, n = 2 and C is a $CH_2\text{-}CH_2(CH_3)$ group.

7. The use claimed in claims 1 to 4, **characterized in that** R in formula (I) is a linear alkyl group containing 11 carbon atoms, k has a value of 5, n = 2 and C is a $CH_2\text{-}CH_2(CH_3)$ group.

8. The use claimed in claims 1 to 7, **characterized in that** the compounds of formula (I) have a cold cloud point below 12°C, preferably below 10°C and more particularly below 6°C.

9. The use claimed in claims 1 to 8, **characterized in that** the compounds of formula (I) have a cold cloud point below 5°C and preferably below 3°C.

10. The use claimed in claims 1 to 9, **characterized in that** the compounds of formula (II) are prepared by reacting two parts $C_{8-22}$ fatty acids with one part polyethylene glycol.

11. The use claimed in claim 10, **characterized in that** the compounds of formula (II) are prepared by reacting two parts $C_{10-12}$ fatty acids with one part polyethylene glycol.

12. The use claimed in claims 10 and 11, **characterized in that** polyethylene glycols with molecular weights of 300 to 600 and preferably 400 to 500 are produced in the reaction.

## Revendications

1. Utilisation de composés de formules générales (I) et/ ou (II)

$$A\text{-}B\text{-}C\text{-}B\text{-}A \qquad (I)$$

$$A\text{-}B\text{-}A \qquad (II)$$

dans lesquelles

A. représente un radical R-COO, R représente un radical alkyle saturé, insaturé, ramifié ou non ramifié comportant de 7 à 21 atomes de carbone,
B. représente un groupe $(C_nH_{2n}O)_k$, n représente des nombres entiers allant de 2 à 4 et k peut prendre des valeurs allant de 1 à 15,
C. représente un radical alkylène linéaire ou ramifié comportant au moins 2 et au plus 6 atomes de carbone,

comme additifs internes pour l'équipement plastifiant d'objets qui contiennent des polyoléfines.

2. Utilisation selon la revendication 1, **caractérisée en ce que** dans la formule (I) R représente un radical alkyle linéaire saturé comportant de 9 à 13, et de préférence de 9 à 11 atomes de carbone.

3. Utilisation selon les revendications 1 et 2, **caractérisée en ce que** dans la formule (I) k prend les valeurs 1 à 15, de préférence 4 à 10 et en particulier 5.

**4.** Utilisation selon les revendications 1 à 3,
**caractérisée en ce que**
dans la formule (I) C représente les radicaux
$CH_2$-$CH_2$, $CH_2$-$CH(CH_3)$, $CH_2$-$CH_2$-$CH_2$ ou $(CH_2)_4$.

**5.** Utilisation selon les revendications 1 à 4,
**caractérisée en ce que**
dans la formule (I) n représente le nombre 2.

**6.** Utilisation selon les revendications 1 à 4,
**caractérisée en ce que**
dans la formule (I) R représente un radical alkyle
linéaire comportant 9 atomes de carbone, k prend
la valeur 5, n vaut 2 et C représente un radical
$CH_2$-$CH_2(CH_3)$.

**7.** Utilisation selon les revendications 1 à 4,
**caractérisée en ce que**
dans la formule (I) R représente un radical alkyle
linéaire comportant 11 atomes de carbone, k prend
la valeur 5, n vaut 2 et C représente un radical
$CH_2$-$CH_2(CH_3)$.

**8.** Utilisation selon les revendications 1 à 7,
**caractérisée en ce que**
les composés de formule (I) présentent un point de
trouble à froid inférieur à 12 °C, de préférence inférieur à 10 °C et en particulier inférieur à 6 °C.

**9.** Utilisation selon l'une des revendications 1 à 8,
**caractérisée en ce que**
les composés de formule (I) présentent un point de
trouble à froid inférieur à 5 °C et de préférence inférieur à 3 °C.

**10.** Utilisation selon les revendications 1 à 9,
**caractérisée en ce qu'**
on produit les composés de formule (II) par réaction
de deux parties d'acides gras comportant de 8 à 22
atomes de carbone avec une partie de polyéthylèneglycol.

**11.** Utilisation selon la revendication 10,
**caractérisée en ce qu'**
on produit les composés de formule (II) par réaction
de deux parties d'acides gras comportant de 10 à
12 atomes de carbone avec une partie de polyéthylèneglycol.

**12.** Utilisation selon les revendications 10 et 11,
**caractérisée en ce que**
dans la réaction on produit des polyéthylèneglycols
ayant des poids moléculaires de 300 à 600, de préférence de 400 à 500.